# EUROPEAN PATENT APPLICATION

(11) **EP 4 723 691 A1**
(43) Date of publication of application: **08.04.2026**
(21) Application number: 23938824.2
(22) Date of filing: 30.05.2023
(51) Int. Cl.: H04W 4/70, H04W 8/14, H04W 48/08, H04W 60/00

(54) **COMMUNICATION METHOD, DEVICE AND SYSTEM, TERMINAL DEVICE, CORE NETWORK DEVICE, AND MEDIUM**

(71) Applicant: Beijing Xiaomi Mobile Software Co., Ltd., Beijing 100085 (CN)
(72) Inventor: ZHU, Chunhui, Beijing 100085 (CN); SHEN, Yang, Beijing 100085 (CN)
(74) Representative: Dehns Germany Partnerschaft mbB
(86) International application number: PCT/CN2023/097273
(87) International publication number: WO 2024/243830

(57) **Abstract**

A communication method, device and system, a terminal device, a core network device, and a medium. The method comprises: sending first information to an access and mobility management function network element, the first information being used for determining that a terminal device supports an ambient Internet-of-things operation. According to the present application, a terminal device can send first information to an access and mobility management function network element, so as to report to a network that the terminal device supports an ambient Internet-of-things operation.

## Description

### TECHNICAL FIELD

The present disclosure relates to the technical field of communication, and in particular, to a communication method and device, a system, a terminal device, a core network device and a medium.

### BACKGROUND

In the 3rd Generation Partnership Project (3GPP) standards, Internet of Things (IoT) services are involved. Among these IoT services, there is a research focus on IoT devices powered by ambient energy, which aims to achieve characteristics such as low power consumption, low complexity, extremely small size, and a long service life.

### SUMMARY

To overcome the problems existing in the related art, the present disclosure provides a communication method and device, a system, a terminal device, a core network device, and a medium.

According to a first aspect of the embodiments of the present disclosure, a communication method is provided, where the method is executed by a terminal device (UE) and the method includes:
sending first information to an access and mobility management function network element, where the first information is used for determining that the terminal device supports an ambient Internet of Things operation.

According to a second aspect of the embodiments of the present disclosure, a communication method is provided, where the method is executed by an access and mobility management function network element, and the method includes:
receiving first information sent by a terminal device; and
determining that the terminal device supports an ambient Internet of Things operation according to the first information.

According to a third aspect of the embodiments of the present disclosure, a communication method is provided, where the method includes:
sending, by a terminal device, first information to a core network device; and
determining, by the core network device, that the terminal device supports an ambient Internet of Things operation according to the first information.

According to a fourth aspect of the embodiments of the present disclosure, a terminal device is provided, and the method includes:
a first sending module, configured to send first information to an access and mobility management function network element, where the first information is used for determining that the terminal device supports an ambient Internet of Things operation.

According to a fifth aspect of the embodiments of the present disclosure, a core network device is provided, and the device includes:
a second receiving module, configured to receive first information sent by a terminal device; and
a second determining module, configured to determine that the terminal device supports an ambient Internet of Things operation according to the first information.

According to a sixth aspect of the embodiments of the present disclosure, a terminal device is provided, and the terminal device includes:
a first processor; and
a first memory for storing instructions executable by the first processor;
where the first processor is configured to execute the executable instructions to implement the communication method provided in the first aspect of the present disclosure.

According to a seventh aspect of the embodiments of the present disclosure, a network device is provided, and the network device includes:
a second processor; and
a second memory for storing instructions executable by the second processor;
where the second processor is configured to execute the executable instructions to implement the communication method provided in the second aspect of the present disclosure.

According to an eighth aspect of the embodiments of the present disclosure, a communication system is provided, which includes the terminal device provided in the sixth aspect and the network device provided in the seventh aspect.

According to a ninth aspect of the embodiments of the present disclosure, a computer-readable storage medium is provided, on which computer program instructions are stored. The program instructions, when executed by a processor, implement the steps of the communication methods provided in the first aspect to the second aspect of the present disclosure.

In a tenth aspect, the embodiments of the present disclosure provide a computer program product. The computer program product, when executed by a communication device, causes the communication device to perform the steps of the communication methods described in the optional implementations of the first aspect to the second aspect.

The technical solutions provided by the embodiments of the present disclosure may include the following beneficial effects. The terminal device may send first information to an access and mobility management function network element to report to the network that the terminal device supports the ambient Internet of Things operation, thereby enabling the access and mobility management function network element to determine that the terminal device supports the ambient Internet of Things operation according to the first information.

It should be understood that the foregoing general description and the following detailed description are exemplary and explanatory only, and do not limit the present disclosure.

### BRIEF DESCRIPTION OF THE DRAWINGS

The aforementioned and/or additional aspects and advantages of the present disclosure will become apparent and readily understood from the following description of the embodiments with reference to the accompanying drawings.
FIG. 1a is a schematic diagram of a communication system shown according to some embodiments.
FIG. 2a is a flowchart of a communication method shown according to some embodiments.
FIG. 2b is a flowchart of a communication method shown according to some embodiments.
FIG. 2c is a flowchart of a communication method shown according to some embodiments.
FIG. 2d is a flowchart of a communication method shown according to some embodiments.
FIG. 2e is a flowchart of a communication method shown according to some embodiments.
FIG. 2f is a flowchart of a communication method shown according to some embodiments.
FIG. 2g is a flowchart of a communication method shown according to some embodiments.
FIG. 2h is a flowchart of a communication method shown according to some embodiments.
FIG. 2i is a flowchart of a communication method shown according to some embodiments.
FIG. 2j is a flowchart of a communication method shown according to some embodiments.
FIG. 2k is a flowchart of a communication method shown according to some embodiments.
FIG. 2l is a flowchart of a communication method shown according to some embodiments.
FIG. 2m is a flowchart of a communication method shown according to some embodiments.
FIG. 3a is a flowchart of a communication method shown according to some embodiments.
FIG. 3b is a flowchart of a communication method shown according to some embodiments.
FIG. 3c is a flowchart of a communication method shown according to some embodiments.
FIG. 3d is a flowchart of a communication method shown according to some embodiments.
FIG. 3e is a flowchart of a communication method shown according to some embodiments.
FIG. 3f is a flowchart of a communication method shown according to some embodiments.
FIG. 3g is a flowchart of a communication method shown according to some embodiments.
FIG. 3h is a flowchart of a communication method shown according to some embodiments.
FIG. 3i is a flowchart of a communication method shown according to some embodiments.
FIG. 3j is a flowchart of a communication method shown according to some embodiments.
FIG. 3k is a flowchart of a communication method shown according to some embodiments.
FIG. 3l is a flowchart of a communication method shown according to some embodiments.
FIG. 4a is a flowchart of a communication method shown according to some embodiments.
FIG. 4b is a flowchart of a communication method shown according to some embodiments.
FIG. 4c is a flowchart of a communication method shown according to some embodiments.
FIG. 4d is a flowchart of a communication method shown according to some embodiments.
FIG. 5 is a block diagram of a terminal device shown according to some embodiments.
FIG. 6 is a block diagram of a core network device shown according to some embodiments.
FIG. 7 is a block diagram of a terminal shown according to some embodiments.
FIG. 8 is a block diagram of a network device shown according to some embodiments.

### DETAILED DESCRIPTION

The embodiments of the present disclosure are not exhaustive and are merely illustrative of some embodiments, and are not intended to impose specific limitations on the protection scope of the present disclosure. In the absence of contradiction, each step in a certain embodiment may be implemented as an independent embodiment, and the steps may be arbitrarily combined. For example, a solution with some steps removed from a certain embodiment may also be implemented as an independent embodiment, and the order of the steps in a certain embodiment may be arbitrarily exchanged. In addition, the optional implementation manners in a certain embodiment may be arbitrarily combined. In addition, the various embodiments may be arbitrarily combined. For example, some or all steps of different embodiments may be arbitrarily combined, and a certain embodiment may be arbitrarily combined with the optional implementation manners of other embodiments.

In various embodiments of the present disclosure, unless otherwise specified or existing logical contradictions, the terms and/or descriptions between the various embodiments are consistent and can be referred to each other. The technical features in different embodiments can be combined to form new embodiments according to their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "the above-mentioned", "said", "the aforesaid", "this", etc., may mean "one and only one", and may also mean "one or more", "at least one", etc. For example, when articles such as "a", "an" and "the" in English are used in translation, the noun following the article may be understood as a singular expression or a plural expression.

In the embodiments of the present disclosure, "plurality" refers to two or more.

In some embodiments, terms such as "at least one of", "one or more", "a plurality of", and "multiple" may be replaced with one another.

In some embodiments, expressions like "at least one of A and B", "A and/or B", "A in one case and B in another case", and "in response to case A and in response to another case B" may include the following technical solutions depending on the situation: in some embodiments, A (executing A independently of B); in some embodiments, B (executing B independently of A); in some embodiments, execution is selected from A and B (A and B are optionally executed); in some embodiments, A and B (both A and B are executed). The same applies when there are more alternatives such as A, B, and C.

In some embodiments, expressions such as "A or B" may include the following technical solutions depending on the situation: in some embodiments, A (executing A independently of B); in some embodiments, B (executing B independently of A); in some embodiments, execution is selected from A and B (A and B are optionally executed). The same applies when there are more alternatives such as A, B, and C.

In the embodiments of the present disclosure, prefixes such as "first" and "second" are only used to distinguish different described objects, and do not constitute any restriction on the position, order, priority, quantity, content, or other aspects of the described objects. For statements about the described objects, reference shall be made to the descriptions in the context of the claims or the embodiments, and no redundant limitation shall be constituted due to the use of these prefixes. For example, if the described object is a "field", the ordinal numbers before "field" in "first field" and "second field" do not limit the position or order between the "fields"; "first" and "second" do not restrict whether the "fields" they modify are in the same message, nor do they limit the sequence order between the "first field" and the "second field". For another example, if the described object is a "level", the ordinal numbers before the "level" in "first level" and "second level" do not limit the priority between the "levels". For yet another example, the quantity of the described object is not limited by the ordinal number, and may be one or more. Taking the "first apparatus" as an example, the quantity of the "apparatus" therein may be one or more. In addition, objects modified by different prefixes may be the same or different. For instance, if the described object is an "apparatus", the "first apparatus" and the "second apparatus" may be the same apparatus or different apparatuses, and their types may be the same or different; for another example: if the described object is "information", the "first information" and the "second information" may be the same information or different information, and their contents may be the same or different.

In some embodiments, expressions such as "including A", "containing A", "used to indicate A", and "carrying A" can be interpreted as directly carrying A, and can also be interpreted as indirectly indicating A. In some embodiments, terms such as "in response to...", "in response to determining...", "in the case of...", "when...", "in the case that...", "if...", and "in the event that..." may be replaced with one another.

In some embodiments, terms such as "greater than", "greater than or equal to", "not less than", "more than", "more than or equal to", "no less than", "higher than", "higher than or equal to", "not lower than", and "above" may be replaced with one another; terms such as "less than", "less than or equal to", "not greater than", "fewer than", "fewer than or equal to", "no more than", "lower than", "lower than or equal to", "not higher than", and "below" may be replaced with one another.

In some embodiments, terms such as "apparatus" may be interpreted as either physical or virtual entities, and their names are not limited to those recorded in the embodiments. Terms including "apparatus", "equipment", "device", "circuit", "network element", "node", "function", "unit", "section", "system", "network", "chip", "chip system", "entity", and "subject" may be replaced with one another.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", and "bandwidth part (BWP)" may be replaced with one another.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", and "client" may be replaced with one another.

In some embodiments, an access network device, a core network device, or a network device may be replaced with a terminal. For example, the various embodiments of the present disclosure may also be applied to a structure in which the communication between an access network device, a core network device, or a network device and a terminal is replaced with communication between multiple terminals (for example, this may also be referred to as device-to-device (D2D), vehicle-to-everything (V2X), etc.). In this case, a structure in which the terminal has all or part of the functions of the access network device may also be adopted. In addition, terms such as "uplink" and "downlink" may also be replaced with terms corresponding to inter-terminal communication (for example, "side"). For example, the uplink channel, the downlink channel, etc., may be replaced with a side channel, and the uplink, the downlink, etc., may be replaced with a sidelink.

In some embodiments, a terminal may be replaced with an access network device, a core network device, or a network device. In this case, a structure may also be adopted in which the access network device, the core network device, or the network device has all or part of the functions of a terminal.

In some embodiments, the names of information, etc., are not limited to those recorded in the embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" may be replaced with one another.

In some embodiments, terms such as "up", "uplink", and "physical uplink" may be replaced with one another; terms such as "down", "downlink", and "physical downlink" may be replaced with one another; and terms such as "side", "sidelink", "side communication", "sidelink communication", "direct connection", "direct link", "direct communication", and "direct link communication" may be replaced with one another.

In some embodiments, terms such as "downlink control information (DCI)", "downlink (DL) assignment", "DL DCI", "uplink (UL) grant", and "UL DCI" may be replaced with one another.

In some embodiments, terms such as "physical downlink shared channel (PDSCH)" and "DL data" may be replaced with one another; terms such as "physical uplink shared channel (PUSCH)" and "UL data" may be replaced with one another.

In some embodiments, terms such as "radio", "wireless", "radio access network (RAN)", "access network (AN)", and "RAN-based" may be replaced with one another.

In some embodiments, terms such as "search space", "search space set", "search space configuration", "search space set configuration", "control resource set (CORESET)", and "CORESET configuration" may be replaced with one another.

In some embodiments, terms such as "synchronization signal (SS)", "synchronization signal block (SSB)", "reference signal (RS)", "pilot", and "pilot signal" may be replaced with one another.

In some embodiments, terms such as "moment", "point in time", "time", and "time position" may be replaced with one another; terms such as "duration", "time period", "time window", "window", and "time" may be replaced with one another.

In some embodiments, terms such as "component carrier (CC)", "cell", "frequency carrier", and "carrier frequency" may be replaced with one another.

In some embodiments, terms such as "resource block (RB)", "physical resource block (PRB)", "sub-carrier group (SCG)", "resource element group (REG)", "PRB pair", "RB pair", and "resource element (RE)" may be replaced with one another.

In some embodiments, terms such as "wireless access scheme" and "waveform" may be replaced with one another.

In some embodiments, terms such as "frame", "radio frame", "subframe", "slot", "sub-slot", "mini-slot", "symbol", "code element (symbol)", and "transmission time interval (TTI)" may be replaced with one another.

In some embodiments, terms such as "obtain", "acquire", "get", "receive", "transmit", "bidirectional transmission", and "transmit and/or receive" may be replaced with one another. These terms can be interpreted as having multiple meanings, including receiving from other entities, acquiring from protocols, obtaining through self-processing, and autonomous implementation, etc.

In some embodiments, terms such as "send", "transmit", "report", "deliver", "transmission", "bidirectional transmission", and "send and/or receive" may be replaced with one another.

In some embodiments, "predetermined" and "preset" can be interpreted as being specified in advance in protocols, etc., or as referring to actions of pre-configuration performed by devices, etc.

In some embodiments, a determination or judgment may be made using a value represented by 1 bit (0 or 1), or by a true or false value (boolean value) represented by true or false, or by a comparison of numerical values (e.g., comparison with a predetermined value), but is not limited thereto.

In some embodiments, "network" may be interpreted as the apparatuses included in the network (e.g., access network device, core network device, network device, etc.).

In some embodiments, "not expecting to receive" may be interpreted as not receiving on time-domain resources and/or frequency-domain resources, or may be interpreted as not performing subsequent processing on the data, etc. after receiving the data, etc.; "not expecting to send" may be interpreted as not sending, or as sending but not expecting the receiver to respond to the sent content.

In some embodiments, obtaining data, information, etc., may comply with the laws and regulations of the country where it is obtained.

In some embodiments, data, information, etc., may be obtained after acquiring the user's consent.

In addition, each element, each row, or each column in the tables of the embodiments of the present disclosure may be implemented as an independent embodiment, and a combination of any element, any row, or any column may also be implemented as an independent embodiment.

Although operations are described in a particular order in the accompanying drawings in the embodiments of the present disclosure, this should not be construed as requiring the operations to be performed in the shown specific order or in a serial order, nor as requiring all of the operations shown to be performed to obtain the desired result. In certain circumstances, multitasking and parallel processing may be advantageous. Furthermore, sending multiple pieces of information via the same message may also be advantageous.

The application environment of the communication method provided in this embodiment is described below.

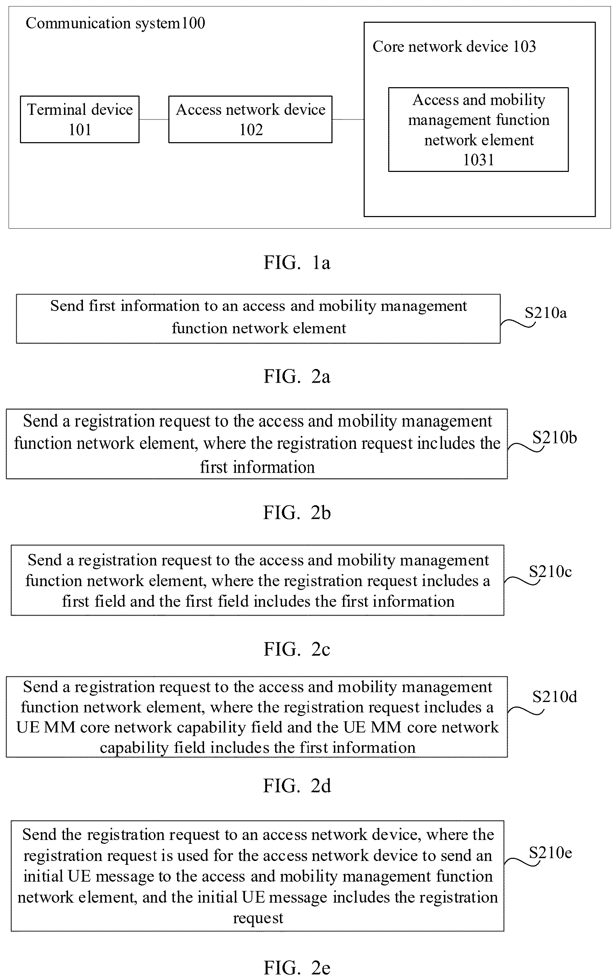

FIG. 1a is a schematic diagram of the architecture of a communication system according to an embodiment of the present disclosure.

As shown in FIG. 1a, the communication system 100 includes a terminal device 101, an access network device 102, and a core network device 103.

In some embodiments, terminal device 101 may be, for example, an ambient power-enabled Internet of Things (A-IoT) device. Ambient power-enabled Internet of Things is an IoT service with an IoT device powered by an energy harvesting apparatus or an activator. The energy harvesting apparatus or activator is not shown in FIG. 1a. The IoT device does not require batteries or only has limited energy storage capability (i.e., using a capacitor). It can enable communication with IoT devices without conventional power source and/or avoids human intervention for recharging or replacing. IoT devices enabled with ambient power do not have conventional batteries and obtain energy through ambient IoT operations. Ambient IoT operations can be understood as the use of energy harvested from radio waves or any other form of energy source, where such energy can be acquired in specific use cases. For instance, in some cases, IoT devices enabled with ambient power can harvest energy from radio waves, which may come from access network entities or other terminal devices. In other scenarios, IoT devices enabled with ambient power can obtain energy from energy sources such as solar energy, light, motion/vibration, heat, pressure, or any other power sources. IoT devices that support ambient power do not require conventional batteries, thus being environmentally friendly. Ambient power-enabled IoT devices may also be referred to as zero-power IoT devices, and the name is not limited herein.

In some implementations, any IoT device that can support ambient power supply may be referred to as an ambient power-enabled IoT device, regardless of whether it can only support ambient power supply.

In some embodiments, an access network device is, for example, a node or device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open radio access network(Open RAN), a cloud radio access network (Cloud RAN), a base station in other communication systems, and an access node in a wireless fidelity (WiFi) system, but is not limited thereto.

In some embodiments, the technical solutions of the present disclosure may be applied to the Open RAN architecture. In this case, the interfaces between access network devices or within an access network device involved in the embodiments of the present disclosure may become internal interfaces of the Open RAN, and the processes and information exchange between these internal interfaces can be implemented through software or programs.

In some embodiments, an access network device may be composed of a central unit (CU) and distributed units (DUs). The CU may also be referred to as a control unit. The adoption of the CU-DU structure may split the protocol layers of the access network device, with functions of some protocol layers being placed in the CU for centralized control, and the functions of the remaining part or all of the protocol layers being distributed in the DUs, which is centrally controlled by the CU, but is not limited thereto.

In some embodiments, a core network device may be a single device that includes one or more network elements, or may be multiple devices or device groups that respectively include all or part of one or more of the aforementioned network elements. The network element may be virtual or physical. The core network includes, for example, at least one of an Evolved Packet Core (EPC), a 5G Core Network (5GCN), and a Next Generation Core (NGC).

In some implementations, the access and mobility management function (AMF) network element 1031 is used for access and mobility management of terminal devices in a mobile network, and the name is not limited thereto.

It can be understood that the communication system described in the embodiments of the present disclosure is intended to more clearly illustrate the technical solutions of the embodiments of the present disclosure, and does not constitute a limitation on the technical solutions provided by the embodiments of the present disclosure. One of ordinary skills in the art can know that, with the evolution of system architectures and the emergence of new service scenarios, the technical solutions provided by the embodiments of the present disclosure are also applicable to similar technical problems.

The following embodiments of the present disclosure may be applied to the communication system 100 shown in FIG. 1a, or some entities thereof, but are not limited thereto. The various entities shown in FIG. 1a are illustrative only. The communication system may include all or part of the entities in FIG. 1a, and may also include other entities not shown in FIG. 1a. The numbers and forms of various entities are arbitrary. The connection relationships between the entities are illustrative only. The entities may be unconnected or connected, and the connection may be in any manner, which may be a direct connection or an indirect connection, a wired connection or a wireless connection.

Various embodiments of the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), 5G New Radio (NR), Future Radio Access (FRA), New-Radio Access Technology (New-RAT), New Radio (NR), New Radio Access (NX), Future Generation Radio Access (FX), Global System for Mobile Communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wide Band (UWB), Bluetooth (registered trademark), Public Land Mobile Network (PLMN), Device-to-Device (D2D) systems, Machine-to-Machine (M2M) systems, Internet of Things (IoT) systems, Vehicle-to-Everything (V2X), systems using other communication methods, next-generation systems extended based on these, etc. In addition, multiple systems (for example, a combination of LTE or LTE-A and 5G, etc.) may also be combined for application.

The following describes some implementations of the present disclosure:
In some implementations of the present disclosure, a terminal device may send the user equipment mobility management (UE MM) core network capability to the AMF. For example, in the 5G standard, the UE MM core network capability is split into the S1 UE network capability and the UE 5GMM core network capability. The S1 UE network capability is mainly used for evolved UMTS terrestrial radio access network (E-UTRAN, 4G access network) access related core network parameters. The UE 5GMM core network capability mainly includes other UE capabilities related to 5GCN or interworking with evolved packet system (EPS), and also contains non-radio-related capabilities, such as non-access stratum (NAS) security algorithms. The S1 UE network capability is transferred between all core network (CN) nodes through changes including AMF to AMF, AMF to mobility management entity (MME), MME to MME, and MME to AMF. The UE 5GMM core network capability is transferred only during AMF to AMF changes.

In some implementations of the present disclosure, to ensure that the UE MM core network capability information stored in the AMF is up to date, for example, when a universal subscriber identity module (USIM) is moved into a different device while outside the coverage and the old device does not send a Detach message, and in cases of inter-radio access type (RAT) registration area updates, the UE may send the UE MM core network capability information to the AMF during the initial registration and mobility registration update procedure within the NAS message.

In some implementations of the present disclosure, the AMF always stores the latest UE MM core network capability received from the UE. Any UE MM core network capability that the AMF receives from an old AMF/MME is replaced when the UE provides the UE MM core network capability via a registration signal,

In some implementations of the present disclosure, if the UE MM core network capability information of the UE changes, for example, in either CM-CONNECTED (connected) or CM-IDLE (idle) state, the UE shall perform a mobility registration update procedure when it next returns to the NG radio access network (NG-RAN) coverage.

In some implementations of the present disclosure, the UE may indicate whether it supports relevant function in the UE 5GMM core network capability.

In some implementations of the present disclosure, the network system can support energy-efficient communication for ambient power-enabled IoT devices, for example, minimizing the overall and/or peak device communication power consumption while meeting communication performance requirements. That is to say, in some implementations, the operation of ambient IoT imposes requirements on networks including the access network and core network, and thus not all networks can support such ambient IoT operations.

Therefore, in some implementations of the present disclosure, it is necessary for ambient power-enabled IoT devices to be able to communicate with the network to inform the network that they support ambient IoT operations.

In addition, in some implementations of the present disclosure, an ambient power-enabled IoT device may not know whether the network can support the A-IoT operations in certain areas. In such cases, then the A-IoT operation may fail and the harvested energy may be wasted.

FIG. 2a is a flowchart illustrating a communication method according to some embodiments. As shown in FIG. 2a, the communication method may be executed by a terminal device (UE), and the method includes the following.

In step S210a, first information is sent to an access and mobility management function network element.

In some implementations, the first information is used for determining that the terminal device supports an ambient IoT operation.

In some implementations, the terminal device may be an ambient power-enabled IoT device, and the ambient power-enabled IoT device supports the ambient IoT operation.

In some implementations, a terminal device that supports the ambient IoT operation may send first information used for determining that the terminal device supports the ambient IoT operation to the access and mobility management function network element, so as to indicate to the network that it supports the ambient IoT operation.

In some implementations, the access and mobility management function network element may receive the first information sent by the terminal device to determine that the terminal device supports the ambient IoT operation.

In some implementations, the name of the first information is not limited. For example, it may also be referred to as preset information, first network behavior information, or simply information, etc.

In some implementations, the terminal device may send the first information to the access and mobility management function network element via a registration request or other messages. These other messages may be existing messages in the protocol or newly added messages, and there is no limitation in this regard.

The embodiments of the present application specify that the terminal device may send the first information to the access and mobility management function network element, enabling the access and mobility management function network element to determine that the terminal device supports the ambient IoT operation based on the first information. Through the embodiments of the present application, the terminal device can report to the network that it supports the ambient IoT operation.

FIG. 2b is a flowchart illustrating a communication method according to some embodiments. As shown in FIG. 2b, the communication method may be executed by a terminal device, and the method includes the following.

In step S210b, a registration request is sent to the access and mobility management function network element, and the registration request includes first information.

In some implementations, the first information is used for determining that the terminal device supports the ambient IoT operation.

In some implementations, the terminal device may send the first information to the access and mobility management function network element via the registration request.

In some implementations, the name of the registration request is not limited, for example, it may be a Registration Request message.

In some implementations, the access and mobility management function network element may receive the registration request, thereby obtaining the first information from the registration request to determine that the terminal device supports the ambient IoT operation.

In some implementations, the registration request may include information such as registration type, subscription concealed identifier (SUCI), 5G-globally unique temporary UE identity (5G-GUTI), paging early indication (PEI), and security parameters.

For the detailed description of step S210b, reference may be made to the aforementioned embodiments, which will not be repeated here.

The embodiments of the present application specify that a terminal device may send the first information to the access and mobility management function network element via a registration request, thereby enabling the access and mobility management function network element to determine that the terminal device supports the ambient IoT operation based on the first information. Through the embodiments of the present application, the terminal device can report to the network, via a registration request, that it supports the ambient IoT operation.

FIG. 2c is a flowchart illustrating a communication method according to some embodiments. As shown in FIG. 2c, the communication method may be executed by a terminal device, and the method includes the following.

In step S210c, a registration request is sent to an access and mobility management function network element, where the registration request includes a first field and the first field includes first information.

In some implementations, the first information is used for determining that the terminal device supports the ambient IoT operation.

In some implementations, the name of the first field is not limited. For example, it may be a network behavior field, a preferred network behavior field, an ambient IoT behavior field, or the like.

In some implementations, the first field may be a newly added field in the registration message. Thus, the terminal device may implement the function of sending the first information to the access and mobility management function network element by adding a new field to the registration request and including the first information in this newly added field.

In some implementations, the first information may be filled in the newly added field.

In some implementations, the access and mobility management function network element may receive the registration request sent by the terminal device, obtain the first information from the newly added first field in the registration request to determine that the terminal device supports the ambient IoT operation.

In some implementations, the first field may be used to record the network behavior supported by the terminal device or the network behavior preferred by the terminal device. The ambient IoT operation may be understood as a type of network behavior of the terminal device.

In some implementations, if the first field is used to record the network behaviors supported by the terminal device and the terminal device supports other network behaviors, the terminal device may fill in and upload multiple network behaviors supported by the terminal device in the first field together.

In some implementations, if the first field is used to record the network behavior preferred by the terminal device and the network behavior preferred by the terminal device is the ambient IoT operation, the terminal device may upload the first information in the first field.

For the detailed description of step S210c, reference may be made to the aforementioned embodiments, which will not be repeated here.

The embodiments of the present application specify that a first field may be added to the registration request. The terminal sends the first information to the access and mobility management function network element through the first information included in the newly added first field, thereby enabling the AMF network element to determine that the terminal device supports the ambient IoT operation based on the first information. Through the embodiments of the present application, the terminal device can report to the network, via the first field newly added to the registration request, that it supports the ambient IoT operation.

FIG. 2d is a flowchart illustrating a communication method according to some embodiments. As shown in FIG. 2d, the communication method may be executed by a terminal device, and the method includes the following.

In step S210d, a registration request is sent to the access and mobility management function network element, where the registration request includes a UE MM core network capability field and the UE MM core network capability field includes first information.

In some implementations, the first information is used for determining that the terminal device supports the ambient IoT operation.

In some implementations, the UE MM core network capability field is an existing field in the registration request.

In some implementations, the first information may be added to the existing UE MM core network capability field in the registration request. Thus, when the network behaviors supported by the terminal device include the ambient IoT operation, the UE MM core network capability field may include the first information. Therefore, the terminal device can implement the function of sending the first information to the access and mobility management function network element through the existing field in the registration request and via the first information included in this existing field.

In some implementations, the access and mobility management function network element may receive the registration request sent by the terminal device, and obtain the first information from the existing UE MM core network capability field in the registration request to determine that the terminal device supports the ambient IoT operation.

In some implementations, the first information may be filled in the existing UE MM core network capability field in the registration request.

For the detailed description of step S210d, reference may be made to the aforementioned embodiments, which will not be repeated here.

The embodiments of the present application specify that the first information may be included in the existing UE MM core network capability field of the registration request. The terminal device can send the first information to the access and mobility management function network element through the first information contained in the existing UE MM core network capability field, thereby enabling the AMF network element to determine that the terminal device supports the ambient IoT operation based on the first information. Through the embodiments of the present application, the terminal device can report to the network, via the existing UE MM core network capability field in the registration request, that it supports the ambient IoT operation.

FIG. 2e is a flowchart illustrating a communication method according to some embodiments. As shown in FIG. 2e, the communication method may be executed by a terminal device, and the method includes the following.

In step S210e, a registration request is sent to an access network device, where the registration request is used by the access network device to send an initial UE message to the access and mobility management function network element, where the initial UE message includes the registration request, and the registration request includes the first information.

In some implementations, the first information is used for determining that the terminal device supports the ambient IoT operation.

In some implementations, the terminal device may send the registration request to the access network device, and the access network device may carry the registration request in an initial UE message and send the initial UE message to the access and mobility management function network element.

In some implementations, the registration request is transparent to the access network device. The access network device forwards the registration request to the access and mobility management function network element via the initial UE message, thereby implementing the process of sending the first information to the access and mobility management function network element.

In some implementations, there is no limitation on the name of the initial UE message. For example, it may be referred to as "Initial UE Message", "Initial Terminal Device Message", etc.

In some implementations, the access and mobility management function network element may receive the initial UE message sent by the access network device, obtain the registration request from the initial UE message, and acquire the first information from the registration request to determine that the terminal device supports the ambient IoT operation.

In some implementations, the initial UE message is sent by the access network device according to the registration request sent by the terminal device.

For the detailed description of step S210e, reference may be made to the aforementioned embodiments, which will not be repeated here.

The embodiments of the present application specify that a registration request may be sent to the access network device. The access network device may send an initial UE message including the registration request to the access and mobility management function network element according to the registration request, thereby enabling the access and mobility management function network element to determine the first information according to the registration request and determine that the terminal device supports the ambient IoT operation based on the first information. Through the embodiments of the present application, the terminal device can report to the network, via the access network device, that it supports the ambient IoT operation.

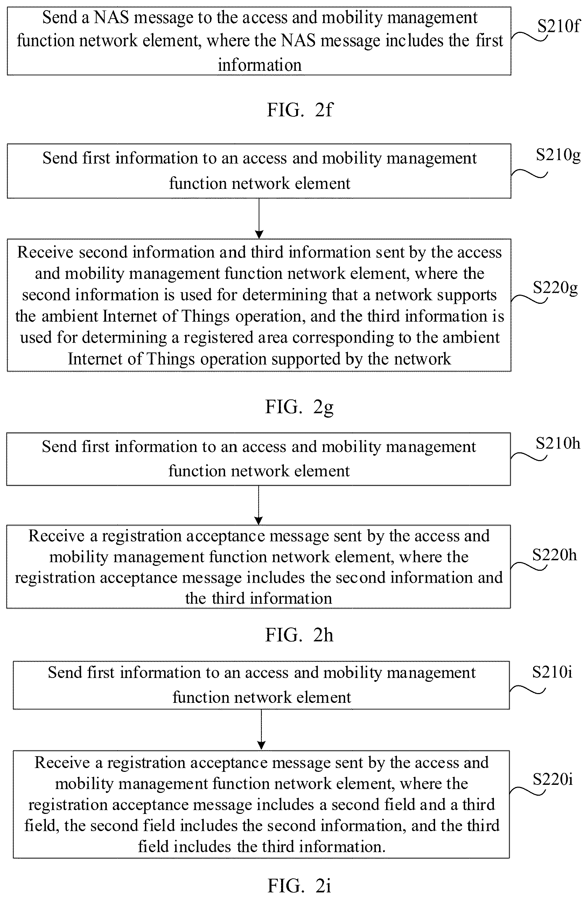

FIG. 2f is a flowchart illustrating a communication method according to some embodiments. As shown in FIG. 2f, the communication method may be executed by a terminal device, and the method includes the following.

In step S210f, a NAS message is sent to an access and mobility management function network element, where the NAS message includes first information.

In some implementations, the first information is used for determining that the terminal device supports the ambient IoT operation.

In some implementations, the first information may be transmitted through the NAS protocol. That is, the process of sending the indication that the terminal device supports the ambient IoT operation to the access and mobility management function network element is realized by modifying the content of the NAS layer.

For the detailed description of step S210f, reference may be made to the aforementioned embodiments, which will not be repeated here.

The embodiments of the present application specify that the first information may be sent to the access and mobility management function network element via a NAS message, thereby enabling the AMF network element to determine that the terminal device supports the ambient IoT operation according to the first information.

FIG. 2g is a flowchart illustrating a communication method according to some embodiments. As shown in FIG. 2g, the communication method may be executed by a terminal device, and the method includes the following.

In step S210g, first information is sent to an access and mobility management function network element.

In step S220g, second information and third information sent by the access and mobility management function network element are received, where the second information is used for determining that the network supports an ambient IoT operation, and the third information is used for determining a registered area corresponding to the ambient IoT operation supported by the network.

In some implementations, the first information is used for determining that the terminal device supports the ambient IoT operation.

In some implementations, the second information is used for determining that the network supports the ambient IoT operation.

In some implementations, the third information is used for determining the registered area corresponding to the ambient IoT operation supported by the network.

In some implementations, the terminal device may receive the second information and the third information sent by the access and mobility management function network element.

In some implementations, after receiving the first information, the access and mobility management function network element may send the second information and the third information to the terminal device, so as to indicate to the terminal device that the network supports the ambient IoT operation and indicate the registered area corresponding to the ambient IoT operation supported by the network.

In some implementations, after receiving the first information, the access and mobility management function network element may authenticate and authorize the UE. Upon successful authentication and authorization, the access and mobility management function network element may send the second information and the third information to the terminal device, so as to indicate to the terminal device that the network supports the ambient IoT operation and specify the registered area corresponding to the ambient IoT operation supported by the network.

In some implementations, the access and mobility management function network element sends the second information and the third information only when the network supports the ambient IoT operation. In some implementations, if the network does not support the ambient IoT operation, the access and mobility management function network element may send information indicating that ambient IoT operation is not supported to the terminal device, such as fourth information.

In some implementations, the terminal device may receive the fourth information sent by the access and mobility management function network element, thereby determining that the network does not support the ambient IoT operation.

In some implementations, if the network does not support the ambient IoT operation, it may also refrain from sending the second information and the third information. If the terminal device does not receive the second information and the third information, it may also determine that the network does not support the ambient IoT operation.

In some implementations, the registered area may be a tracking area list.

For the detailed description of steps S210g-S220g, reference may be made to the aforementioned embodiments, which will not be repeated here.

The embodiments of the present application specify that after receiving the first information, the access and mobility management function network element may send the second information and the third information to the terminal device, so that the terminal device may receive the second information and the third information sent by the access and mobility management function network element to determine that the network supports the ambient IoT operation and determine the registered area corresponding to the ambient IoT operation supported by the network.

FIG. 2h is a flowchart illustrating a communication method according to some embodiments. As shown in FIG. 2h, the communication method may be executed by a terminal device, and the method includes the following.

In step S210h, first information is sent to an access and mobility management function network element.

In step S220h, a registration acceptance message is received from the access and mobility management function network element, where the registration acceptance message includes second information and third information.

In some implementations, the first information is used for determining that the terminal device supports the ambient IoT operation.

In some implementations, the second information is used for determining that the network supports the ambient IoT operation.

In some implementations, the third information is used for determining the registered area corresponding to the ambient IoT operation supported by the network.

In some implementations, the terminal device may receive the second information and the third information sent by the access and mobility management function network element through the registration acceptance message.

In some implementations, after receiving the first information, the access and mobility management function network element may send the second information and the third information to the terminal device, so as to indicate to the terminal device that the network supports the ambient IoT operation and indicate the registered area corresponding to the ambient IoT operation supported by the network.

In some implementations, there is no limitation on the name of the registration acceptance message; for example, it may be a "Registration accept" message.

For the detailed description of steps S210h-S220h, reference may be made to the aforementioned embodiments, which will not be repeated here.

The embodiments of the present application specify that the terminal device may receive the second information and the third information sent by the access and mobility management function network element through the registration acceptance message, thereby enabling the terminal device to determine that the network supports the ambient IoT operation and determine the registered area corresponding to the ambient IoT operation supported by the network.

FIG. 2i is a flowchart illustrating a communication method according to some embodiments. As shown in FIG. 2i, the communication method may be executed by a terminal device, and the method includes the following.

In step S210i, first information is sent to an access and mobility management function network element.

In step S220i, a registration acceptance message is received from the access and mobility management function network element, where the registration acceptance message includes a second field and a third field, the second field includes second information, and the third field includes third information.

In some implementations, the first information is used for determining that the terminal device supports the ambient IoT operation.

In some implementations, the second information is used for determining that the network supports the ambient IoT operation.

In some implementations, the third information is used for determining the registered area corresponding to the ambient IoT operation supported by the network.

In some implementations, there is no limitation on the name of the second field; for example, it may be a "supported network behavior information" field.

In some implementations, there is no limitation on the name of the third field; for example, it may be a "registered area" field, or a "valid area" field, etc.

In some implementations, the second field and the third field may be newly added fields in the registration acceptance message. Therefore, the access and mobility management function network element can realize the function of sending the second information to the terminal device through the newly added second field in the registration acceptance message (via the second information included in this newly added second field), and realize the function of sending the third information to the terminal device through the newly added third field in the registration acceptance message (via the third information included in this newly added third field).

In some implementations, the second information may be filled into the newly added second field.

In some implementations, the third information may be filled into the newly added third field.

In some implementations, the terminal device may receive the registration acceptance message sent by the access and mobility management function network element, obtain the second information from the newly added second field in the registration acceptance message to determine that the network supports the ambient IoT operation, and obtain the third information from the newly added third field in the registration acceptance message to determine the registered area corresponding to the ambient IoT operation supported by the network.

In some implementations, the access and mobility management function network element may indicate that the network does not support the ambient IoT operation through the fourth information included in the newly added second field of the registration acceptance message.

In some implementations, the access and mobility management function network element may indicate that the network does not support the ambient IoT operation by not including the second information in the newly added second field of the registration accept message.

For the detailed description of steps S210i-S220i, reference may be made to the aforementioned embodiments, which will not be repeated here.

The embodiments of the present application specify that a second field and a third field may be newly added to the registration acceptance message. The access and mobility management function network element sends the second information to the terminal device through the second information included in the newly added second field, so that the terminal device can determine that the network supports the ambient IoT operation based on the second information. The access and mobility management function network element sends the third information to the terminal device through the third information included in the newly added third field, so that the terminal device can determine the registered area corresponding to the ambient IoT operation supported by the network based on the third information. Through the embodiments of the present application, the terminal device can determine that the network supports the ambient IoT operation and identify the registered area corresponding to the ambient IoT operation supported by the network via the newly added second field and third field in the registration acceptance message.

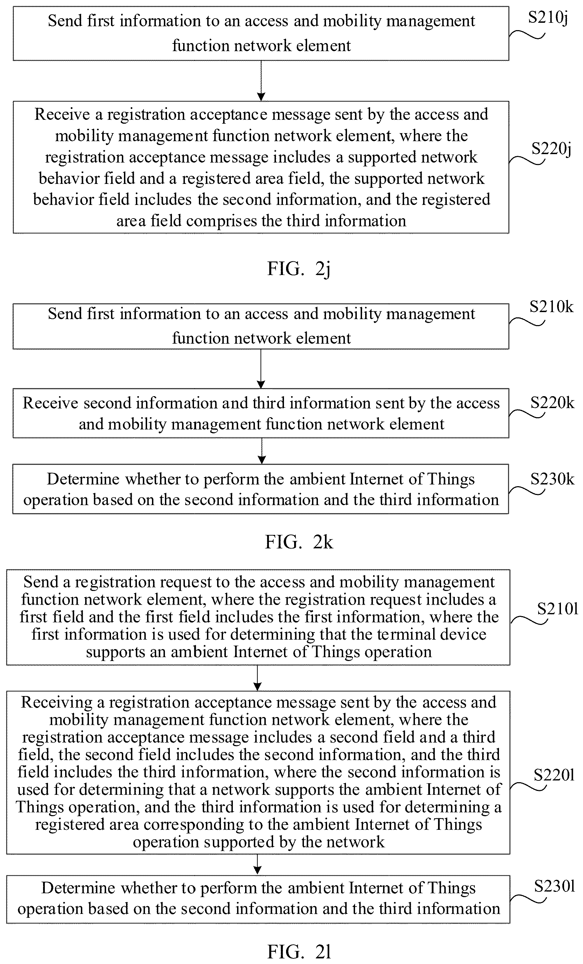

FIG. 2j is a flowchart illustrating a communication method according to some embodiments. As shown in FIG. 2j, the communication method may be executed by a terminal device, and the method includes the following.

In step S210j, first information is sent to an access and mobility management function network element.

In step S220j, a registration acceptance message is received from the access and mobility management function network element, where the registration acceptance message includes a supported network behavior field and a registered area field, the supported network behavior field includes second information, and the registered area field includes third information.

In some implementations, the first information is used for determining that the terminal device supports the ambient IoT operation.

In some implementations, the second information is used for determining that the network supports the ambient IoT operation.

In some implementations, the third information is used for determining the registered area corresponding to the ambient IoT operation supported by the network.

In some implementations, both the supported network behavior field and the registered area field are existing fields in the registration acceptance message.

In some implementations, the second information may be added to the existing supported network behavior field in the registration acceptance message. Thus, when the network behaviors supported by the network include the ambient IoT operation, the supported network behavior field may contain the second information; meanwhile, the third information corresponding to the second information may be added to the existing registered area field in the registration acceptance message. Therefore, the access and mobility management function network element can realize the function of sending the second information and the third information to the terminal device through the existing supported network behavior field and registered area field in the registration acceptance message-specifically, via the second information included in the existing supported network behavior field and the third information included in the existing registered area field.

In some implementations, the access and mobility management function network element may send a registration acceptance message to the terminal device. The existing supported network behavior field in the registration acceptance message includes the second information, and the existing registered area field in the registration acceptance message includes the third information, so as to indicate to the terminal device that the network supports the ambient IoT operation and the registered area corresponding to the ambient IoT operation supported by the network.

In some implementations, the second information may be filled into the existing supported network behavior field in the registration acceptance message.

In some implementations, the third information may be filled into the existing registered area field in the registration acceptance message.

In some implementations, the terminal device may receive the registration acceptance message sent by the access and mobility management function network element, and obtain the second information and the third information corresponding to the second information from the existing supported network behavior field and registered area field in the registration acceptance message, so as to determine that the network supports the ambient IoT operation and the registered area corresponding to the ambient IoT operation supported by the network.

For the detailed description of steps S210j-S220j, reference may be made to the aforementioned embodiments, which will not be repeated here.

The embodiments of the present application specify that the access and mobility management function network element may send the second information to the terminal device through the second information included in the existing supported network behavior field of the registration accept message, so that the terminal device can determine that the network supports the ambient IoT operation based on the second information. In addition, the access and mobility management function network element may send the third information to the terminal device through the third information included in the existing registered area field of the registration acceptance message, so that the terminal device can determine the registered area corresponding to the ambient IoT operation supported by the network based on the third information. Through the embodiments of the present application, the terminal device can determine that the network supports the ambient IoT operation and the registered area corresponding to the ambient IoT operation supported by the network via the existing supported network behavior field and registered area field in the registration acceptance message.

FIG. 2k is a flowchart illustrating a communication method according to some embodiments. As shown in FIG. 2k, the communication method may be executed by a terminal device, and the method includes the following.

In step S210k, first information is sent to an access and mobility management function network element.

In step S220k, second information and third information sent by the access and mobility management function network element are received.

In step S230k, it is determined whether to perform ambient IoT operations according to the second information and the third information.

In some implementations, the first information is used for determining that the terminal device supports the ambient IoT operation.

In some implementations, the second information is used for determining that the network supports the ambient IoT operation.

In some implementations, the third information is used for determining the registered area corresponding to the ambient IoT operation supported by the network.

In some implementations, after receiving the second information and the third information, the terminal device may determine whether to perform the ambient IoT operation based on the second information and the third information.

In some implementations, when the terminal device receives the second information and its current location is within the range specified in the third information, it may perform the ambient IoT operation. That is, the terminal device may harvest energy to obtain power supply from the environment.

For the detailed description of steps S210k-S220k, reference may be made to the aforementioned embodiments, which will not be repeated here.

The embodiments of the present application specify that the terminal device may determine whether to perform the ambient IoT operation based on the second information and the third information. That is, the terminal device may determine whether to perform the ambient IoT operation through information interaction with the network.

FIG. 2l is a flowchart illustrating a communication method according to some embodiments. As shown in FIG. 2l, the communication method may be executed by a terminal device, and the method includes the following.

In step S210l, a registration request is sent to an access and mobility management function network element, where the registration request includes a first field, the first field includes first information, and the first information is used for determining whether the terminal device supports an ambient IoT operation.

In some implementations, the first field is used to record the network behavior supported by the terminal device or the network behavior preferred by the terminal device.

In some implementations, the registration request is transparently forwarded to the access and mobility management function network element via the access network device.

In some implementations, the registration request is sent via a NAS message.

In step S220l, the registration acceptance message sent by the access and mobility management function network element is received, where the registration acceptance message includes a second field and a third field, the second field includes second information and the third field includes third information, the second information is used for determining that the network supports the ambient IoT operation, and the third information is used for determining a registered area corresponding to the ambient IoT operation supported by the network.

In some implementations, the registration acceptance message is transparently forwarded to the terminal device via the access network device.

In some implementations, the registration acceptance message is sent via a NAS message.

In step S230l, it is determined whether to perform the ambient IoT operation based on the second information and the third information.

In some implementations, steps S210l-S230l are optional, and one or more of these steps may be omitted or substituted in different embodiments.

For the detailed description of steps S210l-S230l, reference may be made to the foregoing embodiments, and details are not repeated herein.

The embodiments of the present disclosure specify that the terminal device may report to the network its support for the ambient IoT operation through the newly added first field in the registration request; the terminal device may determine that the network supports the ambient IoT operation and the registered area corresponding to the ambient IoT operation supported by the network through the newly added second field and third field in the registration acceptance message; and the terminal device may determine whether to perform the ambient IoT operation through information interaction with the network.

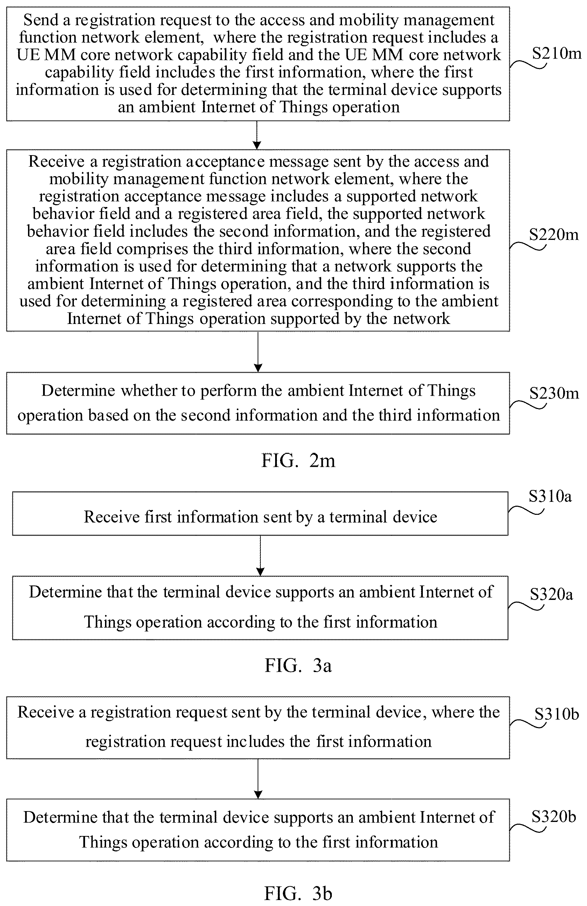

FIG. 2m is a flowchart illustrating a communication method according to some embodiments. As shown in FIG. 2m, the communication method may be executed by a terminal device, and the method includes the following.

In step S210m, a registration request is sent to an access and mobility management function network element, where the registration request includes a UE MM core network capability field, the UE MM core network capability field includes first information, and the first information is used for determining that the terminal device supports the ambient IoT operation.

In some implementations, the registration request is transparently forwarded to the access and mobility management function network element via the access network device.

In some implementations, the registration request is sent via a NAS message.

In step S220m, a registration acceptance message sent by the access and mobility management function network element is received, where the registration acceptance message includes a supported network behavior field and a registered area field, the supported network behavior field includes second information, and the registered area field includes third information, where the second information is used for determining that the network supports the ambient IoT operation, and the third information is used for determining the registered area corresponding to the ambient IoT operation supported by the network.

In some implementations, the registration acceptance message is transparently forwarded to the terminal device via the access network device.

In some implementations, the registration acceptance message is sent via a NAS message.

In step S230m, it is determined whether to perform the ambient IoT operation based on the second information and the third information.

In some implementations, steps S210m-S230m are optional, and one or more of these steps may be omitted or substituted in different embodiments.

For the detailed description of steps S210m-S230m, reference may be made to the foregoing embodiments, and details are not repeated herein.

The embodiments of the present disclosure specify that the terminal device may report to the network its support for the ambient IoT operation through the existing UE MM core network capability field in the registration request; the terminal device may determine that the network supports the ambient IoT operation and the registered area corresponding to the ambient IoT operation supported by the network through the existing supported network behavior field and registered area field in the registration acceptance message; and the terminal device may determine whether to perform the ambient IoT operation through information interaction with the network.

FIG. 3a is a flowchart illustrating a communication method according to some embodiments. As shown in FIG. 3a, the communication method may be executed by an access and mobility management function network element, and the method includes the following.

In step S310a, first information sent by a terminal device is received.

In step S320a, it is determined that the terminal device supports an ambient IoT operation according to the first information.

For the detailed description of steps S310a-S320a, reference may be made to the foregoing embodiments, and details are not repeated herein.

The embodiments of the present disclosure specify that the access and mobility management function network element may receive the first information sent by the terminal device, thereby determining that the terminal device supports the ambient IoT operation according to the first information.

FIG. 3b is a flowchart illustrating a communication method according to some embodiments. As shown in FIG. 3b, the communication method may be executed by an access and mobility management function network element, and the method includes the following.

In step S310b, a registration request sent by a terminal device is received, where the registration request includes first information.

In step S320b, it is determined that the terminal device supports an ambient IoT operation according to the first information.

For the detailed description of steps S310b-S320b, reference may be made to the foregoing embodiments, and details are not repeated herein.

The embodiments of the present disclosure specify that the access and mobility management function network element may receive the first information sent by the terminal device through the registration request, thereby determining that the terminal device supports the ambient IoT operation according to the first information.

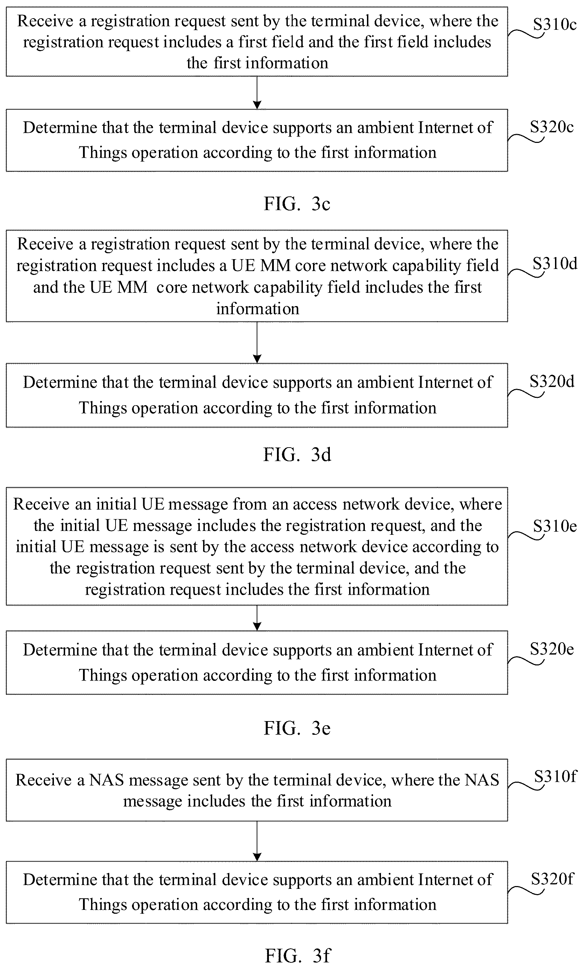

FIG. 3c is a flowchart illustrating a communication method according to some embodiments. As shown in FIG. 3c, the communication method may be executed by an access and mobility management function network element, and the method includes the following.

In step S310 c, a registration request sent by a terminal device is received, where the registration request includes a first field, and the first field includes first information.

In step S320c, it is determined that the terminal device supports an ambient IoT operation according to the first information.

In some implementations, the first field is used to record the network behavior supported by the terminal device or the network behavior preferred by the terminal device.

For the detailed description of steps S310c-S320c, reference may be made to the foregoing embodiments, and details are not repeated herein.

The embodiments of the present application specify that a first field may be added to the registration request. The terminal sends the first information to the access and mobility management function network element through the first information included in the newly added first field, thereby enabling the AMF network element to determine that the terminal device supports the ambient IoT operation based on the first information. Through the embodiments of the present application, the access and mobility management function network element can determine that the terminal device supports the ambient IoT operation through the newly added first field in the registration request.

FIG. 3d is a flowchart illustrating a communication method according to some embodiments. As shown in FIG. 3d, the communication method may be executed by an access and mobility management function network element, and the method includes the following.

In step S310d, a registration request sent by a terminal device is received, where the registration request includes a UE MM core network capability field and the UE MM core network capability field includes first information.

In step S320d, it is determined that the terminal device supports an ambient IoT operation based on the first information.

For the detailed description of steps S310d-S320d, reference may be made to the foregoing embodiments, and details are not repeated herein.

The embodiments of the present application specify that the first information may be included in the existing UE MM core network capability field of the registration request. The terminal device can send the first information to the access and mobility management function network element through the first information contained in the existing UE MM core network capability field, thereby enabling the AMF network element to determine that the terminal device supports the ambient IoT operation based on the first information. Through the embodiments of the present application, the access and mobility management function network element can determine that the terminal device supports the ambient IoT operation through the existing UE MM core network capability field in the registration request.

FIG. 3e is a flowchart illustrating a communication method according to some embodiments. As shown in FIG. 3e, the communication method may be executed by an access and mobility management function network element, and the method includes the following.

In step S310e, an initial UE message sent by an access network device is received, where the initial UE message includes a registration request, the initial UE message is sent by the access network device based on the registration request sent by the terminal device, and the registration request includes the first information.

In step S320e, it is determined that the terminal device supports an ambient IoT operation according to the first information.

For the detailed description of steps S310e-S320e, reference may be made to the foregoing embodiments, and details are not repeated herein.

The embodiments of the present disclosure specify that a terminal device may send a registration request to an access network device, and the access network device may send an initial UE message including the registration request to an access and mobility management function network element according to the registration request. In this way, the access and mobility management function network element can determine the first information according to the registration request and determine that the terminal device supports the ambient IoT operation according to the first information. Through the embodiments of the present application, the access and mobility management function network element can determine that the terminal device supports the ambient IoT operation via the initial UE message sent by the access network device.

FIG. 3f is a flowchart illustrating a communication method according to some embodiments. As shown in FIG. 3f, the communication method may be executed by an access and mobility management function network element, and the method includes the following.

In step S310f, a NAS message sent by a terminal device is received, where the NAS message includes first information.

In step S320f, it is determined that the terminal device supports an ambient IoT operation according to the first information.

For the detailed description of steps S310f-S320f, reference may be made to the foregoing embodiments, and details are not repeated herein.

The embodiments of the present disclosure specify that the access and mobility management function network element may determine that the terminal device supports the ambient IoT operation through the NAS message.

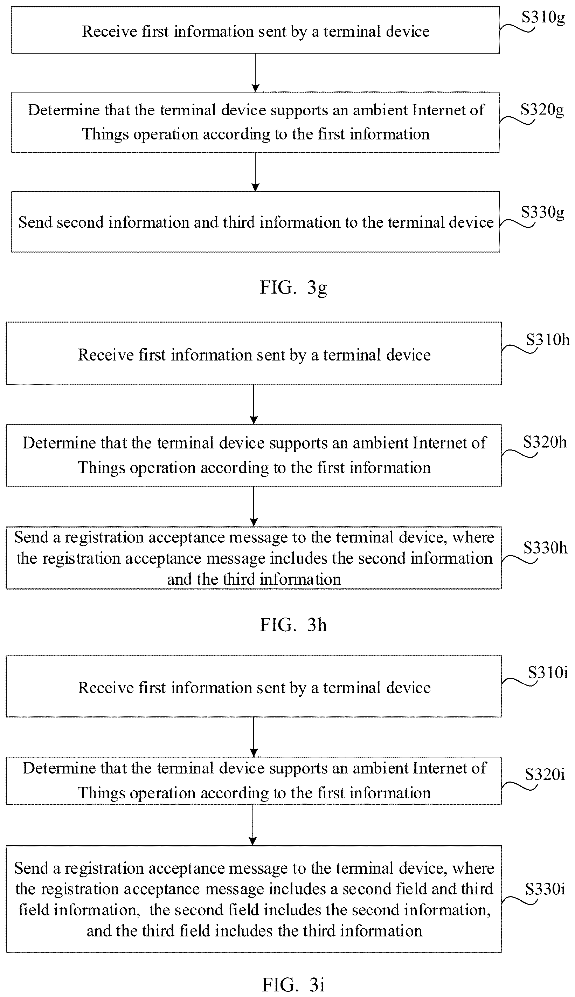

FIG. 3g is a flowchart illustrating a communication method according to some embodiments. As shown in FIG. 3g, the communication method may be executed by an access and mobility management function network element, and the method includes the following.

In step S310g, first information sent by a terminal device is received.

In step S320g, it is determined that the terminal device supports an ambient IoT operation according to the first information.

In step S330g, second information and third information are sent to the terminal device.

In some implementations, the second information is used for determining that the network supports the ambient IoT operation, and the third information is used for determining the registered area corresponding to the ambient IoT operation supported by the network.

For the detailed description of steps S310g-S330g, reference may be made to the foregoing embodiments, and details are not repeated herein.

The embodiments of the present application specify that after receiving the first information, the access and mobility management function network element may send the second information and the third information to the terminal device, so as to indicate to the terminal device that the network supports the ambient IoT operation and indicate the registered area corresponding to the ambient IoT operation supported by the network.

FIG. 3h is a flowchart illustrating a communication method according to some embodiments. As shown in FIG. 3h, the communication method may be executed by an access and mobility management function network element, and the method includes the following.

In step S310h, first information sent by a terminal device is received.

In step S320h, it is determined that the terminal device supports an ambient IoT operation according to the first information.

In step S330h, a registration acceptance message is sent to the terminal device, where the registration acceptance message includes second information and third information.

In some implementations, the second information is used for determining that the network supports the ambient IoT operation, and the third information is used for determining the registered area corresponding to the ambient IoT operation supported by the network.

For the detailed description of steps S310g-S330h, reference may be made to the foregoing embodiments, and details are not repeated herein.

The embodiments of the present disclosure specify that the access and mobility management function network element may send the second information and the third information to the terminal device through a registration accept message, so as to indicate to the terminal device that the network supports the ambient IoT operation and indicate the registered area corresponding to the ambient IoT operation supported by the network.

FIG. 3i is a flowchart illustrating a communication method according to some embodiments. As shown in FIG. 3i, the communication method may be executed by an access and mobility management function network element, and the method includes the following.

In step S310i, first information sent by a terminal device is received.

In step S320i, it is determined that the terminal device supports an ambient IoT operation according to the first information.

In step S330i, a registration acceptance message is sent to the terminal device, where the registration acceptance message includes a second field and a third field, the second field includes second information, and the third field includes third information.

In some implementations, the second information is used for determining that the network supports the ambient IoT operation, and the third information is used for determining the registered area corresponding to the ambient IoT operation supported by the network.

For the detailed description of steps S310i-S330i, reference may be made to the foregoing embodiments, and details are not repeated herein.

The embodiments of the present application specify that a second field and a third field may be newly added to the registration acceptance message. The access and mobility management function network element sends the second information to the terminal device through the second information included in the newly added second field, so that the terminal device can determine that the network supports the ambient IoT operation based on the second information. The access and mobility management function network element sends the third information to the terminal device through the third information included in the newly added third field, so that the terminal device can determine the registered area corresponding to the ambient IoT operation supported by the network based on the third information. Through the embodiments of the present application, the access and mobility management function network element can indicate to the terminal device that the network supports the ambient IoT operation and the registered area corresponding to the ambient IoT operation supported by the network through the newly added second field and third field in the registration acceptance message.

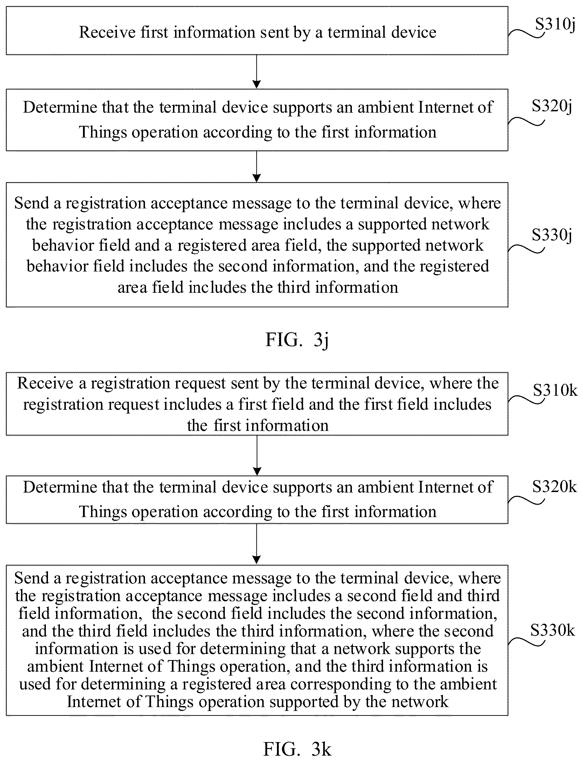

FIG. 3j is a flowchart illustrating a communication method according to some embodiments. As shown in FIG. 3j, the communication method may be executed by an access and mobility management function network element, and the method includes the following.

In step S310j, first information sent by a terminal device is received.

In step S320j, it is determined that the terminal device supports an ambient IoT operation according to the first information.

In step S330j, a registration acceptance message is sent to the terminal device, where the registration acceptance message includes a supported network behavior field and a registered area field, the supported network behavior field includes second information, and the registered area field includes third information.

In some implementations, the second information is used for determining that the network supports the ambient IoT operation, and the third information is used for determining the registered area corresponding to the ambient IoT operation supported by the network.

For the detailed description of steps S310j-S330j, reference may be made to the foregoing embodiments, and details are not repeated herein.

The embodiments of the present application specify that the access and mobility management function network element may send the second information to the terminal device through the second information included in the existing supported network behavior field of the registration accept message, so that the terminal device can determine that the network supports the ambient IoT operation based on the second information. In addition, the access and mobility management function network element may send the third information to the terminal device through the third information included in the existing registered area field of the registration acceptance message, so that the terminal device can determine the registered area corresponding to the ambient IoT operation supported by the network based on the third information. Through the embodiments of the present application, the access and mobility management function network element may indicate to the terminal device that the network supports the ambient IoT operation and the registered area corresponding to the ambient IoT operation supported by the network through the existing supported network behavior field and registered area field in the registration accept message.

FIG. 3k is a flowchart illustrating a communication method according to some embodiments. As shown in FIG. 3k, the communication method may be executed by an access and mobility management function network element, and the method includes the following.

In step S310k, a registration request sent by a terminal device is received, the registration request includes a first field and the first field includes first information.

In some implementations, the first field is used to record the network behavior supported by the terminal device or the network behavior preferred by the terminal device.

In some implementations, the registration request is transparently forwarded to the access and mobility management function network element via the access network device.

In some implementations, the registration request is received from the access network device through an initial UE message.

In some implementations, the registration request is sent via a NAS message.

In step S320k, it is determined that the terminal device supports an ambient IoT operation according to the first information.

In step S330k, a registration acceptance message is sent to the terminal device, where the registration acceptance message includes a second field and a third field, the second field includes second information, and the third field includes third information, where the second information is used for determining that the network supports the ambient IoT operation, and the third information is used for determining the registered area corresponding to the ambient IoT operation supported by the network.

In some implementations, the registration acceptance message is transparently forwarded to the terminal device through the access network device.

In some implementations, the registration acceptance message is sent via a NAS message.

In some implementations, the second information and the third information are used by the terminal device to determine whether to perform the ambient IoT operation.

In some implementations, steps S310k- S330k are optional, and one or more of these steps may be omitted or substituted in different embodiments.

For the detailed description of steps S310k-S330k, reference may be made to the foregoing embodiments, and details are not repeated herein.

The embodiments of the present disclosure specify that the access and mobility management function network element may determine that the terminal device supports the ambient IoT operation through the newly added first field in the registration request; the access and mobility management function network element may indicate to the terminal device that the network supports the ambient IoT operation and the registered area corresponding to the ambient IoT operation supported by the network through the newly added second field and third field in the registration accept message. The terminal device can determine whether to perform the ambient IoT operation through information interaction with the network.

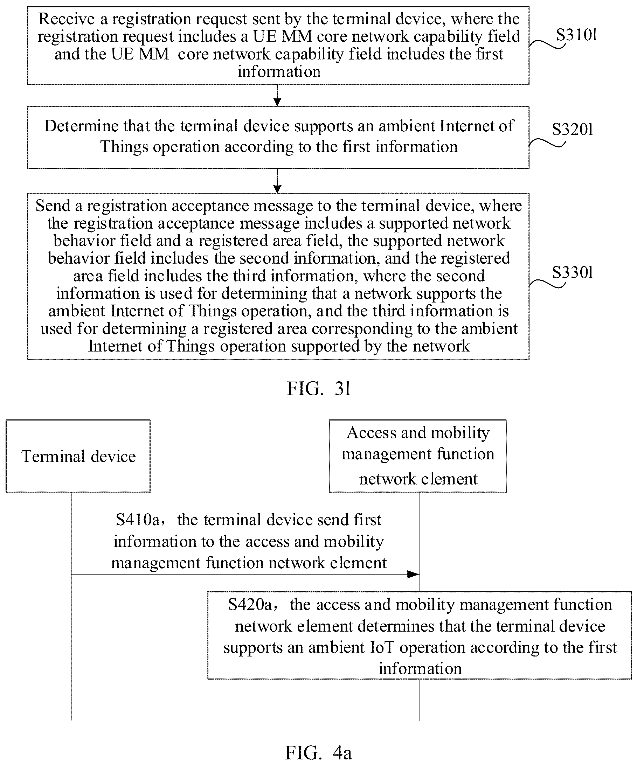

FIG. 3l is a flowchart illustrating a communication method according to some embodiments. As shown in FIG. 3l, the communication method may be executed by an access and mobility management function network element, and the method includes the following.

In step S310l, a registration request sent by the terminal device is received, where the registration request includes a UE MM core network capability field, and the UE MM core network capability field includes first information.

In some implementations, the registration request is transparently forwarded to the access and mobility management function network element via the access network device.

In some implementations, the registration request is received from the access network device through an initial UE message.

In some implementations, the registration request is sent via a NAS message.

In step S3201, it is determined that the terminal device supports an ambient IoT operation according to the first information.

In step S3301, a registration acceptance message is sent to the terminal device, where the registration acceptance message includes a supported network behavior field and a registered area field, the supported network behavior field includes second information, and the registered area field includes third information, where the second information is used for determining that the network supports the ambient IoT operation, and the third information is used for determining that the registered area corresponding to the ambient IoT operation supported by the network.

In some implementations, the registration acceptance message is transparently forwarded to the terminal device by the access network device.

In some implementations, the registration acceptance message is sent via a NAS message.

In some implementations, the second information and the third information are used by the terminal device to determine whether to perform the ambient IoT operation.

In some implementations, steps S310l-S330l are optional, and one or more of these steps may be omitted or substituted in different embodiments.

For the detailed description of steps S310l-S330l, reference may be made to the foregoing embodiments, and details are not repeated herein.

The embodiments of the present disclosure specify that the access and mobility management function network element can determine that the terminal device supports the ambient IoT operation through the existing UE MM core network capability field in the registration request. The access and mobility management function network element may indicate to the terminal device that the network supports the ambient IoT operation and the registered area corresponding to the ambient IoT operation supported by the network through the existing supported network behavior field and registered area field in the registration acceptance message. The terminal device can determine whether to perform the ambient IoT operation through information interaction with the network.

FIG. 4a is a flowchart illustrating a communication method according to some embodiments. As shown in FIG. 4a, the communication method may be applied to a communication system, which includes a terminal device and an access and mobility management function network element. The method includes the following steps.

In step S410a, the terminal device sends first information to the access and mobility management function network element.

In step S420a, the access and mobility management function network element determines that the terminal device supports the ambient IoT operation according to the first information.

For the detailed description of steps S410a-S420a, reference may be made to the foregoing embodiments, and details are not repeated herein.

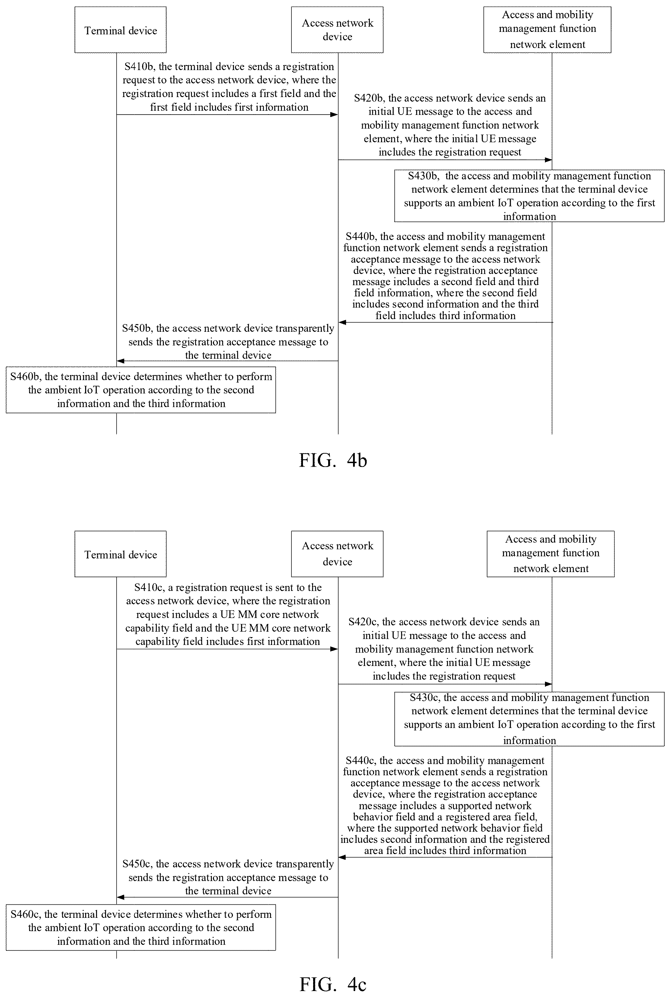

FIG. 4b is a flowchart illustrating a communication method according to some embodiments. As shown in FIG. 4b, the communication method may be applied to a communication system, which includes a terminal device, an access network device and an access and mobility management function network element. The method includes the following steps.

In step S410b, the terminal device sends a registration request to the access network device, where the registration request includes a first field and the first field includes first information.

In step S420b, the access network device sends an initial UE message to the access and mobility management function network element, where the initial UE message includes the registration request.

In step S430b, the access and mobility management function network element determines that the terminal device supports an ambient IoT operation according to the first information.

In step S440b, the access and mobility management function network element sends a registration acceptance message to the access network device, where the registration acceptance message includes a second field and third field information, where the second field includes the second information and the third field includes the third information.

In some implementations, the second information is used for determining that the network supports the ambient IoT operation, and the third information is used for determining a registered area corresponding to the ambient IoT operation supported by the network.

In step S450b, the access network device transparently sends the registration acceptance message to the terminal device.

In step S460b, the terminal device determines whether to perform the ambient IoT operation according to the second information and the third information.

For the detailed description of steps S410b-S460b, reference may be made to the foregoing embodiments, and details are not repeated herein.

FIG. 4c is a flowchart illustrating a communication method according to some embodiments. As shown in FIG. 4c, the communication method may be used in a communication system, which includes a terminal device, an access network device, and an access and mobility management function network element. The method includes the following steps.

In step S410c, a registration request is sent to the access network device, where the registration request includes a UE MM core network capability field and the UE MM core network capability field includes first information.

In step S420c, the access network device sends an initial UE message to the access and mobility management function network element, where the initial UE message includes the registration request.

In step S430c, the access and mobility management function network element determines that the terminal device supports the ambient IoT operation according to the first information.

In step S440c, the access and mobility management function network element sends a registration acceptance message to the access network device, where the registration acceptance message includes a supported network behavior field and a registered area field, where the supported network behavior field includes second information and the registered area field includes third information.

In some implementations, the second information is used for determining that the network supports the ambient IoT operation, and the third information is used for determining a registered area corresponding to the ambient IoT operation supported by the network.

In step S450c, the access network device transparently sends the registration acceptance message to the terminal device.

In step S460c, the terminal device determines whether to perform the ambient IoT operation according to the second information and the third information.

For the detailed description of steps S410c-S460c, reference may be made to the foregoing embodiments, and details are not repeated herein.

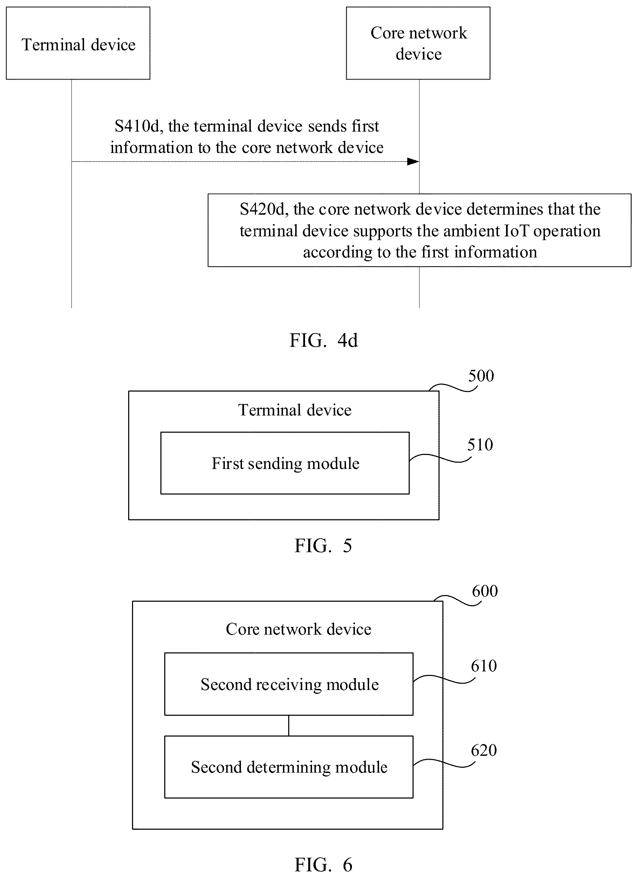

FIG. 4d is a flowchart illustrating a communication method according to some embodiments. As shown in FIG. 4d, the communication method may be applied to a communication system, which includes a terminal device and a core network device. The method includes the following steps.

In step S410d, the terminal device sends first information to the core network device.

In step S420d, the core network device determines that the terminal device supports the ambient IoT operation according to the first information.

For the detailed description of steps S410d-S420d, reference may be made to the foregoing embodiments, and details are not repeated herein.

The following is a method for determining a positioning mode according to some embodiments, and the method includes the following steps.
1. the UE (A-IoT device/tag) sends an RRC establishment request including a registration request to the NG-RAN. The registration request includes the registration type, SUCI, 5G-GUTI or PEI, and security parameters. The registration request includes the preferred network behavior (ambient IoT operation). The NG-RAN initiates an N2 setup request (initial UE message) to the AMF, with the registration request included in the request from the NG-RAN to the AMP.

Furthermore, the UE may also add its capability "ambient IoT operation" to the "UE MM core network capability" to indicate to the network (AMF) its capability of ambient IoT operation.

2. The AMF receives the N2 setup request and the registration request. After authentication and authorization of the UE, the AMF sends a registration acceptance message to the UE via NG-RAN. The registration acceptance message includes the supported network behavior information (ambient IoT operation) and a registered area (tracking area list).

If the UE indicates in the registration request that it supports the ambient IoT operation in the UE MM core network capability, the AMF includes the supported network behavior information (ambient IoT operation) and the registered area (tracking area list) in the registration acceptance message sent to the UE.

It should be noted that for multiple embodiments or features separated by "or", even if some of the features are not implementable, it will not affect other solutions. In addition, provided that there is no contradiction, the embodiments of the present disclosure may be combined with other embodiments, implementations and their various optional solutions involved in communication methods, which will not be repeated here.

The embodiments of the present disclosure also propose an apparatus for implementing any of the above methods. For example, an apparatus is proposed, which includes units or modules for implementing various steps performed by the terminal device in any of the above methods. For another example, another apparatus is proposed, which includes units or modules for implementing various steps performed by the network device in any of the above methods.

It should be understood that the division of each unit in the above apparatus is merely a division of logical functions. In actual implementation, all or part of the units may be integrated into a single physical entity, or they may be physically separated. In addition, the units in the apparatus may be implemented in the form of a processor invoking software. For example, the apparatus includes a processor, which is connected to a memory, the memory stores computer instructions, and the processor invokes the computer instructions stored in the memory to implement any one of the above methods or the functions of each unit of the above apparatus. The processor is, for example, a general-purpose processor such as a central processing unit (CPU) or a microprocessor, and the memory is a memory inside the apparatus or a memory outside the apparatus. Alternatively, the units in the apparatus may be implemented in the form of hardware circuits, and the functions of some or all units may be realized through the design of hardware circuits. The above hardware circuits may be understood as one or more processors. For example, in one implementation, the above hardware circuit is an application-specific integrated circuit (ASIC), and the functions of some or all of the above units are realized through the design of the logical relationships of components in the circuit. For another example, in another implementation, the above hardware circuit may be implemented by a programmable logic device (PLD). Taking a field programmable gate array (FPGA) as an example, it may include a large number of logic gate circuits, and the connection relationships between the logic gate circuits are configured through configuration files, thereby realizing the functions of some or all of the above units. All units of the above apparatus may be entirely implemented in the form of the processor invoking software, or entirely in the form of hardware circuits, or part of the units in the form of the processor invoking software and the remaining part in the form of hardware circuits.

In the embodiments of the present disclosure, a processor is a type of circuit with signal processing capability. In one implementation, the processor may be a circuit capable of reading and executing instructions, such as a central processing unit (CPU), a microprocessor, a graphics processing unit (GPU) (which can be understood as a type of microprocessor), or a digital signal processor (DSP), etc. In another implementation, the processor may realize certain functions through the logical relationships of a hardware circuit, where the logical relationships of the aforementioned hardware circuit are either fixed or reconfigurable. For example, the processor is a hardware circuit implemented by an application-specific integrated circuit (ASIC) or a programmable logic device (PLD), such as a field-programmable gate array (FPGA). In a reconfigurable hardware circuit, the process in which the processor loads a configuration file to realize the configuration of the hardware circuit can be understood as the process in which the processor loads instructions to realize the functions of some or all of the aforementioned units. In addition, the processor may also be a hardware circuit designed for artificial intelligence, which can be understood as a type of ASIC, such as a neural network processing unit (NPU), a tensor processing unit (TPU), or a deep learning processing unit (DPU), etc.

FIG. 5 is a block diagram illustrating a terminal device 500 according to some embodiments. Referring to FIG. 5, the terminal device 500 may include:
a first sending module 510, configured to send first information to an access and mobility management function network element, where the first information is used for determining that the terminal device supports an ambient Internet of Things operation.

In some implementations, the first sending module 510 includes:
a first sending submodule, configured to send a registration request to the access and mobility management function network element, where the registration request includes the first information.

In some implementations, the first sending module 510 includes:
a second sending submodule, configured to send a registration request to the access and mobility management function network element, where the registration request includes a first field and the first field includes the first information.

In some implementations, the first field is used to record a network behavior supported by the terminal device or a network behavior preferred by the terminal device.

In some implementations, the first sending module 510 includes:
a third sending submodule, configured to send a registration request to the access and mobility management function network element, where the registration request includes a UE MM core network capability field and the UE MM core network capability field includes the first information.

In some implementations, the first transmitting module 510 includes:
a fourth sending submodule, configured to send the registration request to an access network device, where the registration request is used for the access network device to send an initial UE message to the access and mobility management function network element, and the initial UE message includes the registration request.

In some implementations, the first sending module 510 includes:
a fifth sending submodule, configured to send a NAS message to the access and mobility management function network element, where the NAS message includes the first information.

In some implementations, the terminal device 500 further includes:
a first receiving module, configured to receive second information and third information sent by the access and mobility management function network element, where the second information is used for determining that a network supports the ambient Internet of Things operation, and the third information is used for determining a registered area corresponding to the ambient Internet of Things operation supported by the network.

In some implementations, the first receiving module includes:
a first receiving submodule, configured to receive a registration acceptance message sent by the access and mobility management function network element, where the registration acceptance message includes the second information and the third information.

In some implementations, the first receiving module includes:
a second receiving submodule, configured to receive a registration acceptance message sent by the access and mobility management function network element, where the registration acceptance message includes a second field and a third field, the second field includes the second information, and the third field includes the third information.

In some implementations, the first receiving module includes:
a third receiving submodule, configured to receive a registration acceptance message sent by the access and mobility management function network element, where the registration acceptance message includes a supported network behavior field and a registered area field, the supported network behavior field includes the second information, and the registered area field includes the third information.

In some implementations, the terminal device 500 further includes:
a first determining module, configured to determine whether to perform the ambient Internet of Things operation based on the second information and the third information.

FIG. 6 is a block diagram illustrating a core network device 600 according to some embodiments. Referring to FIG. 6, the core network device 600 may include:
a second receiving module 610, configured to receive first information sent by a terminal device; and
a second determining module 620, configured to determine that the terminal device supports an ambient Internet of Things operation according to the first information.

In some embodiments, the second receiving module 610 includes:
a fourth receiving submodule, configured to receive a registration request sent by the terminal device, where the registration request includes the first information.

In some embodiments, the second receiving module 610 includes:
a fifth receiving submodule, configured to receive a registration request sent by the terminal device, where the registration request includes a first field and the first field includes the first information.

In some implementations, the first field is used to record a network behavior supported by the terminal device or a network behavior preferred by the terminal device.

In some embodiments, the second receiving module 610 includes:
a sixth receiving submodule, configured to receive a registration request sent by the terminal device, where the registration request includes a UE MM core network capability field and the UE MM core network capability field includes the first information.

In some embodiments, the second receiving module 610 includes:
a seventh receiving submodule, configured to receive an initial UE message from an access network device, where the initial UE message includes the registration request, and the initial UE message is sent by the access network device according to the registration request sent by the terminal device.

In some embodiments, the second receiving module 610 includes:
an eighth receiving submodule, configured to receive a NAS message sent by the terminal device, where the NAS message includes the first information.

In some implementations, the core network device 600 further includes:
a second sending module, configured to send second information and third information to the terminal device, where the second information is used for determining that a network supports the ambient Internet of Things operation, and the third information is used for determining a registered area corresponding to the ambient Internet of Things operation supported by the network.

In some implementations, the second sending module includes:
a sixth sending submodule, configured to send a registration acceptance message to the terminal device, where the registration acceptance message includes the second information and the third information.

In some implementations, the second sending module includes:
a seventh sending submodule, configured to send a registration acceptance message to the terminal device, where the registration acceptance message includes a second field and third field information, the second field includes the second information, and the third field includes the third information.

In some implementations, the second sending module includes:
an eighth sending submodule, configured to send a registration acceptance message to the terminal device, where the registration acceptance message includes a supported network behavior field and a registered area field, the supported network behavior field includes the second information, and the registered area field includes the third information.

Regarding the devices in the above embodiments, the specific manner in which each module performs operations has been described in detail in the embodiments related to the method, and will not be elaborated on in detail here.

The present disclosure further provides a computer-readable storage medium, on which computer program instructions are stored. The program instructions, when executed by a processor, implements the steps of the communication method provided in the present disclosure.

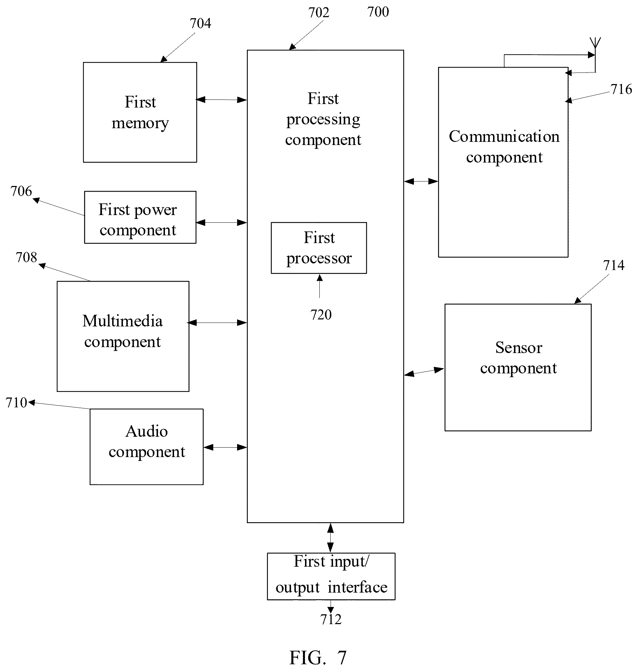

FIG. 7 is a block diagram illustrating a terminal device 700 according to some embodiments. For example, the terminal device 700 may be an ambient power-enabled IoT device.

Referring to FIG. 7, the terminal device 700 may include one or more of the following components: a first processing component 702, a first memory 704, a first power component 706, a multimedia component 708, an audio component 710, a first input/output (I/O) interface 712, a sensor component 714, and a communication component 716.

The processing component 702 typically controls overall operations of the terminal device 700, such as the operations associated with display, telephone calls, data communications, camera operations, and recording operations. The first processing component 702 may include one or more processors 720 to execute instructions to complete all or part of the steps in the above-described methods. Moreover, the processing component 702 may include one or more modules which facilitate the interaction between the first processing component 702 and other components. For instance, the first processing component 702 may include a multimedia module to facilitate the interaction between the multimedia component 708 and the first processing component 702.

The first memory 704 is configured to store various types of data to support the operation of the terminal device 700. Examples of such data include instructions for any applications or methods operated on the terminal device 700, contact data, phonebook data, messages, pictures, video, etc. The first memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The first power supply component 706 provides power for various components of the terminal device 700. The first power supply component 706 is powered by an energy harvesting apparatus or an activator, and may include components associated with generating, managing, and distributing power for the terminal device 700.

The multimedia component 708 includes a screen providing an output interface between the terminal device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the terminal device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the terminal device 700 is in an operation mode, such as a call mode, a recording mode, and a voice recognition mode. The received audio signal may be further stored in the first memory 704 or transmitted via the communication component 716. In some embodiments, the audio component 710 further includes a speaker to output audio signals.

The first I/O interface 712 provides an interface between the first processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the terminal device 700. For instance, the sensor component 714 may detect an open/closed status of the terminal device 700, relative positioning of components, e.g., the display and the keypad, of the terminal device 700, a change in location of the terminal device 700 or a component of the terminal device 700, a presence or absence of user contact with the terminal device 700, an orientation or an acceleration/deceleration of the terminal device 700, and a change in temperature of the terminal device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the terminal device 700 and other devices. The terminal device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

In exemplary embodiments, the terminal device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described communication methods.

In an exemplary embodiment, a non-transitory computer-readable storage medium containing instructions is further provided. For example, the first memory 704 contains instructions, the aforementioned instructions may be executed by the first processor 720 of the terminal device 700 to implement the above-mentioned communication method. For instance, the non-transitory computer-readable storage medium may be a ROM, random access memory (RAM), a CD-ROM, a magnetic tape, a floppy disk, an optical data storage device, etc.

In addition to being a standalone electronic device, the aforementioned apparatus may also be a part of a standalone electronic device. For example, in one embodiment, the apparatus may be an Integrated Circuit (IC) or a chip, where the integrated circuit may be a single IC or a collection of multiple ICs; the chip may include, but is not limited to, the following types: a graphics processing unit (GPU), a central processing unit (CPU), a field programmable gate array (FPGA), a digital signal processor (DSP), an application specific integrated circuit (ASIC), a system on chip (SoC, or System-Level Chip), etc. The above integrated circuit or chip may be used to execute executable instructions (or code) to implement the above communication method. The executable instructions may be stored in the integrated circuit or chip, or may be obtained from other apparatuses or devices. For example, the integrated circuit or chip includes a processor, a memory, and an interface for communicating with other apparatuses. The executable instructions may be stored in the processor and implement the above access management method when executed by the processor; or, the integrated circuit or chip can receive executable instructions through the interface and transmit them to the processor for execution to implement the above communication method.

In another exemplary embodiment, a computer program product is further provided. The computer program product includes a computer program executable by a programmable device, and the computer program has a code portion for performing the aforementioned communication method when executed by the programmable device.

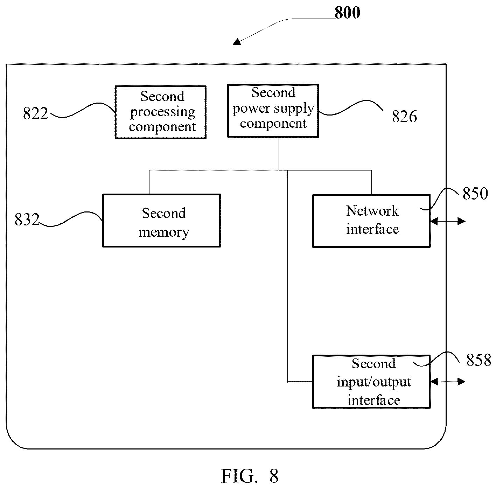

FIG. 8 is a block diagram illustrating a network device according to an exemplary embodiment. For example, the network device 800 may be provided as a core network device or another network logical entity in an access network device. Referring to FIG. 8, the network device 800 includes a second processing component 822, which further includes one or more processors, and a memory resource represented by a second memory 832 for storing instructions executable by the second processing component 822, such as application programs. The application programs stored in the second memory 832 may include one or more modules, each corresponding to one set of instructions. In addition, the second processing component 822 is configured to execute the instructions to perform the steps of the communication method provided in the above method embodiments.

The network device 800 may further include a second power supply component 826 configured to perform power management of the network device 800, a wired or wireless network interface 850 configured to connect the network device 800 to a network, and a second input/output interface 858. The network device 800 may operate based on an operating system stored in the second memory 832, such as Windows Server^{™}, Mac OS X^{™}, Unix^{™}, Linux^{™}, FreeBSD^{™}, or the like.

In another exemplary embodiment, a communication system is further provided. The communication system includes a terminal device and a core network device, where the terminal device is configured to perform the steps of the aforementioned communication method executed by the terminal device, and the core network device is configured to perform the steps of the aforementioned communication method executed by the access and mobility management function network element.

The embodiments of the present disclosure are not exhaustive and are merely illustrative of some embodiments, and are not intended to impose specific limitations on the protection scope of the present disclosure. In the absence of contradiction, each step in a certain embodiment may be implemented as an independent embodiment, and the steps may be arbitrarily combined. For example, a solution with some steps removed from a certain embodiment may also be implemented as an independent embodiment, and the order of the steps in a certain embodiment may be arbitrarily exchanged. In addition, the optional implementation manners in a certain embodiment may be arbitrarily combined. In addition, the various embodiments may be arbitrarily combined. For example, some or all steps of different embodiments may be arbitrarily combined, and a certain embodiment may be arbitrarily combined with the optional implementation manners of other embodiments. In various embodiments of the present disclosure, unless otherwise specified or existing logical contradictions, the terms and/or descriptions between the various embodiments are consistent and can be referred to each other. The technical features in different embodiments can be combined to form new embodiments according to their inherent logical relationships.

Other embodiments of the present disclosure will be readily apparent to those skilled in the art upon consideration of the specification and practice of the present disclosure. This application is intended to cover any variations, uses, or adaptations of the present disclosure that follow the general principles of the present disclosure and include common knowledge or customary technical means in the art not disclosed herein. The specification and embodiments are to be regarded as illustrative only, with the true scope and spirit of the present disclosure being indicated by the following claims.

It should be understood that the present disclosure is not limited to the precise structure described and shown in the figures, and various modifications and changes may be made without departing from its scope. The scope of the present disclosure is limited only by the appended claims.

## Claims

1. A communication method, performed by a terminal device (UE), comprising:
sending first information to an access and mobility management function network element, wherein the first information is used for determining that the terminal device supports an ambient Internet of Things operation.

2. The method according to claim 1, wherein sending the first information to the access and mobility management function network element comprises:
sending a registration request to the access and mobility management function network element, wherein the registration request comprises the first information.

3. The method according to claim 1 or 2, wherein sending the first information to the access and mobility management function network element comprises:
sending a registration request to the access and mobility management function network element, wherein the registration request comprises a first field and the first field comprises the first information.

4. The method according to claim 3, wherein the first field is used to record a network behavior supported by the terminal device or a network behavior preferred by the terminal device.

5. The method according to claim 1 or 2, wherein sending the first information to the access and mobility management function network element comprises:
sending a registration request to the access and mobility management function network element, wherein the registration request comprises a UE MM core network capability field and the UE MM core network capability field comprises the first information.

6. The method according to any one of claims 2-5, wherein sending the registration request to the access and mobility management function network element comprises:
sending the registration request to an access network device, wherein the registration request is used for the access network device to send an initial UE message to the access and mobility management function network element, and the initial UE message comprises the registration request.

7. The method according to any one of claims 1-6, wherein sending the first information to the access and mobility management function network element comprises:
sending a NAS message to the access and mobility management function network element, wherein the NAS message comprises the first information.

8. The method according to any one of claims 1-7, further comprising:
receiving second information and third information sent by the access and mobility management function network element, wherein the second information is used for determining that a network supports the ambient Internet of Things operation, and the third information is used for determining a registered area corresponding to the ambient Internet of Things operation supported by the network.

9. The method according to claim 8, wherein receiving the second information and the third information sent by the access and mobility management function network element comprises:
receiving a registration acceptance message sent by the access and mobility management function network element, wherein the registration acceptance message comprises the second information and the third information.

10. The method according to claim 8 or 9, wherein receiving the second information and the third information sent by the access and mobility management function network element comprises:
receiving a registration acceptance message sent by the access and mobility management function network element, wherein the registration acceptance message comprises a second field and a third field, the second field comprises the second information, and the third field comprises the third information.

11. The method according to claim 8 or 9, wherein receiving the second information and the third information sent by the access and mobility management function network element comprises:
receiving a registration acceptance message sent by the access and mobility management function network element, wherein the registration acceptance message comprises a supported network behavior field and a registered area field, the supported network behavior field comprises the second information, and the registered area field comprises the third information.

12. The method according to any one of claims 8-11, further comprising:
determining whether to perform the ambient Internet of Things operation based on the second information and the third information.

13. A communication method, performed by an access and mobility management function network element, comprising:
receiving first information sent by a terminal device; and
determining that the terminal device supports an ambient Internet of Things operation according to the first information.

14. The method according to claim 13, wherein receiving the first information sent by the terminal device comprises:
receiving a registration request sent by the terminal device, wherein the registration request comprises the first information.

15. The method according to claim 13 or 14, wherein receiving the first information sent by the terminal device comprises:
receiving a registration request sent by the terminal device, wherein the registration request comprises a first field and the first field comprises the first information.

16. The method according to claim 15, wherein the first field is used to record a network behavior supported by the terminal device or a network behavior preferred by the terminal device.

17. The method according to claim 13 or 14, wherein receiving the first information sent by the terminal device comprises:
receiving a registration request sent by the terminal device, wherein the registration request comprises a UE MM core network capability field and the UE MM core network capability field comprises the first information.

18. The method according to any one of claims 14-17, wherein receiving the registration request sent by the terminal device comprises:
receiving an initial UE message from an access network device, wherein the initial UE message comprises the registration request, and the initial UE message is sent by the access network device according to the registration request sent by the terminal device.

19. The method according to any one of claims 13-18, wherein receiving the first information sent by the terminal device comprises:
receiving a NAS message sent by the terminal device, wherein the NAS message comprises the first information.

20. The method according to any one of claims 13-19, further comprising:
sending second information and third information to the terminal device, wherein the second information is used for determining that a network supports the ambient Internet of Things operation, and the third information is used for determining a registered area corresponding to the ambient Internet of Things operation supported by the network.

21. The method according to claim 20, wherein sending the second information and the third information to the terminal device comprises:
sending a registration acceptance message to the terminal device, wherein the registration acceptance message comprises the second information and the third information.

22. The method according to claim 20 or 21, wherein sending the second information and the third information to the terminal device comprises:
sending a registration acceptance message to the terminal device, wherein the registration acceptance message comprises a second field and third field information, the second field comprises the second information, and the third field comprises the third information.

23. The method according to claim 20 or 21, wherein sending the second information and the third information to the terminal device comprises:
sending a registration acceptance message to the terminal device, wherein the registration acceptance message comprises a supported network behavior field and a registered area field, the supported network behavior field comprises the second information, and the registered area field comprises the third information.

24. A communication method, comprising:
sending, by a terminal device, first information to a core network device; and
determining, by the core network device, that the terminal device supports an ambient Internet of Things operation according to the first information.

25. A terminal device, comprising:
a first sending module, configured to send first information to an access and mobility management function network element, wherein the first information is used for determining that the terminal device supports an ambient Internet of Things operation.

26. A core network device, comprising:
a second receiving module, configured to receive first information sent by a terminal device; and
a second determining module, configured to determine that the terminal device supports an ambient Internet of Things operation according to the first information.

27. A communication device, comprising:
one or more processors;
wherein the processor is configured to invoke computer instructions to cause the communication device to execute the communication method according to any one of claims 1-23.

28. A communication system, comprising a terminal device and a core network device, wherein the terminal device is configured to implement the communication method according to any one of claims 1-12, and the core network device is configured to implement the communication method according to any one of claims 13-23.

29. A computer-readable storage medium, wherein the computer-readable storage medium stores computer instructions, and the computer instructions, when executed on a communication device, cause the communication device to execute the communication method according to any one of claims 1-23.
